Europäisches Patentamt

European Patent Office

Office européen des brevets

(19)

(11) Veröffentlichungsnummer: **0 066 547**
**A2**

(12) # EUROPÄISCHE PATENTANMELDUNG

(21) Anmeldenummer: **82810235.0**

(22) Anmeldetag: **28.05.82**

(51) Int. Cl.³: **A 47 B 31/00**
**A 47 B 55/00**

(30) Priorität: **02.06.81 CH 3589/81**

(43) Veröffentlichungstag der Anmeldung:
**08.12.82 Patentblatt 82/49**

(84) Benannte Vertragsstaaten:
**AT BE CH DE FR GB IT LI NL SE**

(71) Anmelder: **SCHWEIZERISCHE ALUMINIUM AG**

**CH-3965 Chippis(CH)**

(72) Erfinder: **Grap, Siegfried**
**Weihermattstrasse 14**
**CH-8962 Bergdietikon(CH)**

(72) Erfinder: **Ritter, Walter**
**Dorfstrasse 208**
**CH-8212 Neuhausen am Rheinfall(CH)**

(72) Erfinder: **Gsponer, Gerhard**
**Tösstalstrasse 174**
**CH-8400 Winterthur(CH)**

(54) **Servierwagen.**

(57) Bei einem Servierwagen auf bremsbaren Rollen aus einem Gehäuse 10 und mit diesem gelenkig verbundenen Türen 40 bzw. Abdeckungen, sowie daran angeordneten Schliessvorrichtungen 14 und gegebenenfalls in diese angeordneten Schubfächern 20 oder Tablaren ist das Gehäuse einstückig aus einem Kunststoff geformt. Zur Herstellung des Gehäuses 10 wird vorzugsweise ein Polyurethan-Integralschaum verwendet.

*Fig. 1*

EP 0 066 547 A2

-1-

<u>Servierwagen</u>

Die Erfindung betrifft einen Servierwagen auf bremsbaren Rollen, insbesondere zum Bedienen in Verkehrsfahrzeugen wie Flugzeuge, Eisenbahnen und anderes mehr, bestehend aus einem Gehäuse und einer mit diesem gelenkig verbundenen Tür bzw. Abdeckung sowie daran angeordneten Schliessvorrichtungen und mit gegebenenfalls in dieses einsetzbare Schubfächer oder Tablare.

Die heute verwendeten Servierwagen bestehen aus einer Vielzahl von Einzelteilen, welche wiederum aus unterschiedlichen Materialien hergestellt sind. Dies gilt sowohl für das Grundgehäuse als auch für die daran befestigten mehr oder minder notwendigen Teile.

Es sind grundsätzlich drei funktionelle Hauptbestandteile zu unterscheiden:

- Das Oberteil,
- der Nutzraum und
- das Unterteil.

Das Oberteil weist in der Regel eine Oberfläche aus rostfreiem Stahlblech auf, dessen überstehende Profile von Leisten eingefasst sind. Es beinhaltet meist eine Trockeneis-Schublade aus Aluminium, Plastik oder einer Kombination davon.

Den Nutzraum verschliesst eine Tür aus gepressten Aluminiumprofilen in Sandwich-Konstruktionen.

Der Nutzraum selber wird von Verbundpaneelen aus Isoliermaterial gebildet, wobei Führungsschienen aus Aluminium an der Innenseite von sich gegenüberliegenden Seitenpaneelen befestigt sind.

Der Unterteil wiederum muss steif sein und schwere Belastungsstösse aushalten.

Dieser Aufbau bekannter Servierwagen hat zum einen den Nachteil, dass die Herstellung der notwendigen Einzelteile und deren Zusammenbau sehr arbeitsintensiv und damit teuer ist. Manche Teile sind nach dem Zusammenbau schlecht zugänglich, so dass eine mögliche, notwendige Reparatur erschwert wird.

Beim Uebergang der Einzelteile zueinander entstehen Spalten und Absätze, in denen sich gerne Schmutz ansammelt und deren Reinigung beinahe unmöglich ist.

Das in der Regel aus Verbundpaneelen hergestellte Gehäuse weist eine geringe Schlagfestigkeit auf, die beim häufigen Gebrauch des Servierwagens schnell zu seiner Unansehnlichkeit führt.

Weiterhin ist zu erwähnen, dass die Isolierung zwischen der in dem Oberteil befindlichen, mit Trockeneis gefüllten Eisschublade (ca. minus 60°C) und den in dem obersten Schiebefach befindlichen Getränken oder Nahrungsmitteln zumeist nicht ausreichend ist, so dass die Getränke bzw. die Nahrungsmittel hierdurch eine für den Gebrauch zu tiefe Temperatur erhalten.

Der Erfinder hat sich zum Ziel gesetzt, einen Servierwagen zu entwickeln, welcher einfach herzustellen ist, und mit welchem unter anderem die Isolierung zwischen der Eisschublade und den in dem obersten Schiebefach befindlichen Getränken und Nahrungsmitteln sehr erheblich verbessert wird.

Die Aufgabe wird dadurch gelöst, dass das eine Einheit darstellende, aus Kunststoff hergestellte Gehäuse Ausformungen zur Aufnahme von Gelenken bzw. Scharnieren, Schliesssvorrichtungen und dergleichen mehr sowie Vorsprünge zur Aufnahme von Schubladen oder Tablaren und Ausnehmungen aufweist.

Als Kunststoff kommt hierbei insbesondere ein Polyurethan-
Integralschaum in Betracht.

Dieses Gehäuse "aus einem Guss" hat unter anderem den wesentlichen Vorteil, dass zu seiner Herstellung nur ein Werkzeug
notwendig ist. Polyurethan wird dabei als Werkstoff bevorzugt, da es wegen der schäumenden Herstellungsweise alle
Ausformungen eines Werkzeuges gut umkleidet und so ein genaues Abbild des Werkzeuges bildet. Zudem hat es hervorragende Isolier- und Oberflächeneigenschaften und weist geringe Verschleisserscheinungen bei hohen Temperaturdifferenzen auf.

Weiterhin ist die Reinigung dieses Gehäuses erheblich vereinfacht, da keine Spalten gebildet sind, in denen sich
Schmutzteile ansammeln bzw. bakterielle Herde bilden können.
Die hygienische Verbesserung ist ein ganz erheblicher Vorteil.

Die Schlagfestigkeit bedeutet bei dem erfindungsgemässen
Gehäuse kein Problem mehr. Sie wird durch die den Kunststoff innewohnendne Elastizität wesentlich verbessert. - Weiterhin ist darauf hinzuweisen, dass das Aussehen des Servierwagens beeinträchtigende Beschädigungen verhältinsmässig
einfach zu reparieren sind.

Vorzugsweise werden an diesem Gehäuse bereits während des
Herstellungsvorganges Ausformungen vorgenommen, welche der
einfachen Anordnung von notwendigen Einzelheiten oder dem
Ersatz von zusätzlichen Montagen dienen. Zu letzteren zählt das Anformen von Führungsschienen im Inneren des Nutzraumes des Servierwagens.

Ausnehmungen sind erforderlich für die Anordnung von Tablaren oder Platten, das Anbringen von Scharnieren für eine Tür und das dazu gehörende Schloss und für die Laufrollen und die Bremse auf der Unterseite des Gehäuses.

Dieses sind aber auch die wenigen Teile, welche schadhaft werden können, wobei ihre erfindungsgemässe Anordnung eine Reparatur erheblich erleichtert.

Eine mit dem Gehäuse über die Scharniere verbundene Tür ist vorzugsweise aus dem gleichen Stoff geformt wie das Gehäuse. Dies gilt auch für das Eisfach.

Weitere Vorteile, Merkmale und Einzelheiten der Erfindung ergeben sich aus der nachfolgenden Beschreibung eines bevorzugten Ausführungsbeispieles sowie anhand einer den Erfindungsgegenstand in vereinfachter Weise darstellenden Zeichnung, und zwar gemäss

Fig. 1    in Schrägansicht einen Servierwagen "S".

Fig. 2    einen Schnitt durch den in der Fig. 1 gezeigten Servierwagen, jedoch in einem grösseren Massstab als in der Fig. 1 und

Fig. 3    einen Schnitt durch den Servierwagen gemäss der Linie III-III in der Figur 2.

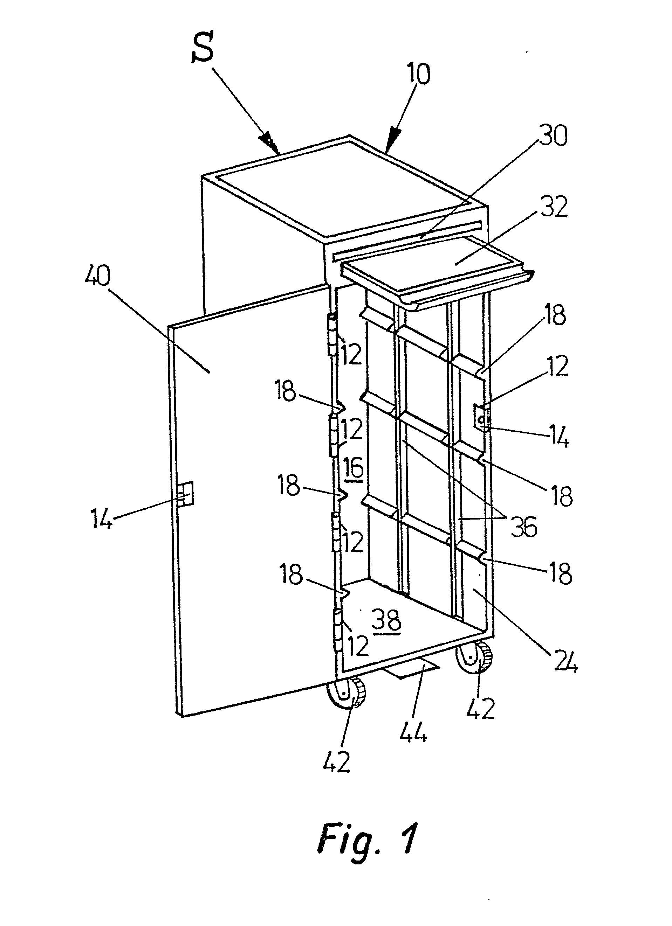

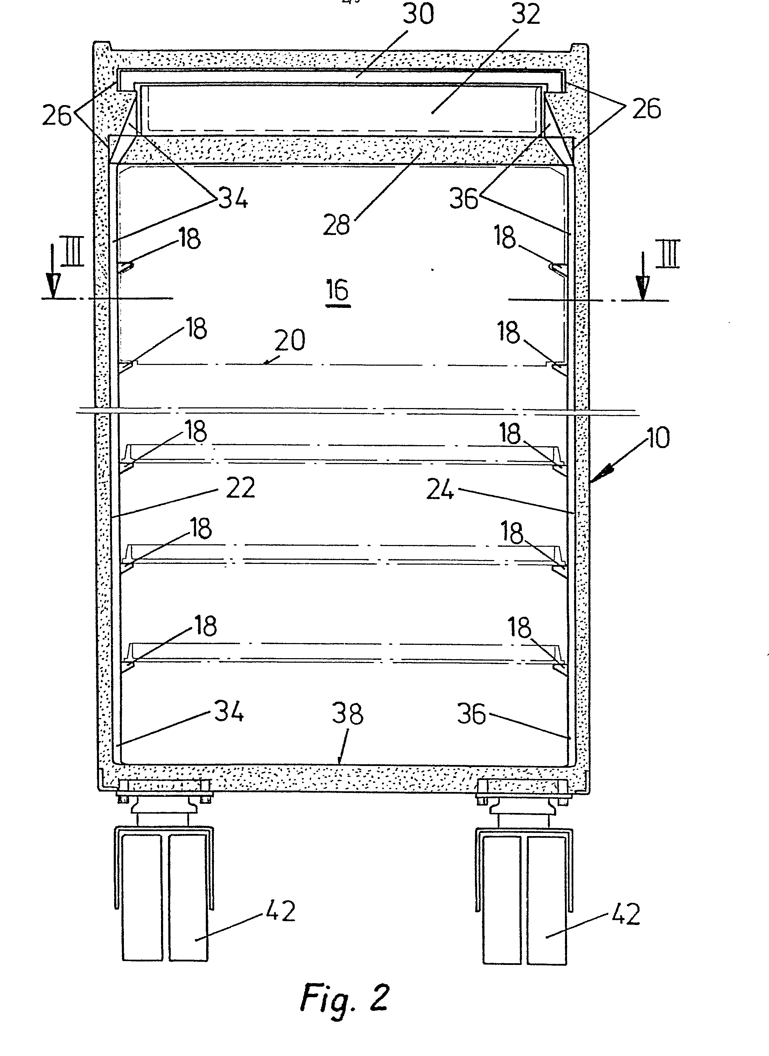

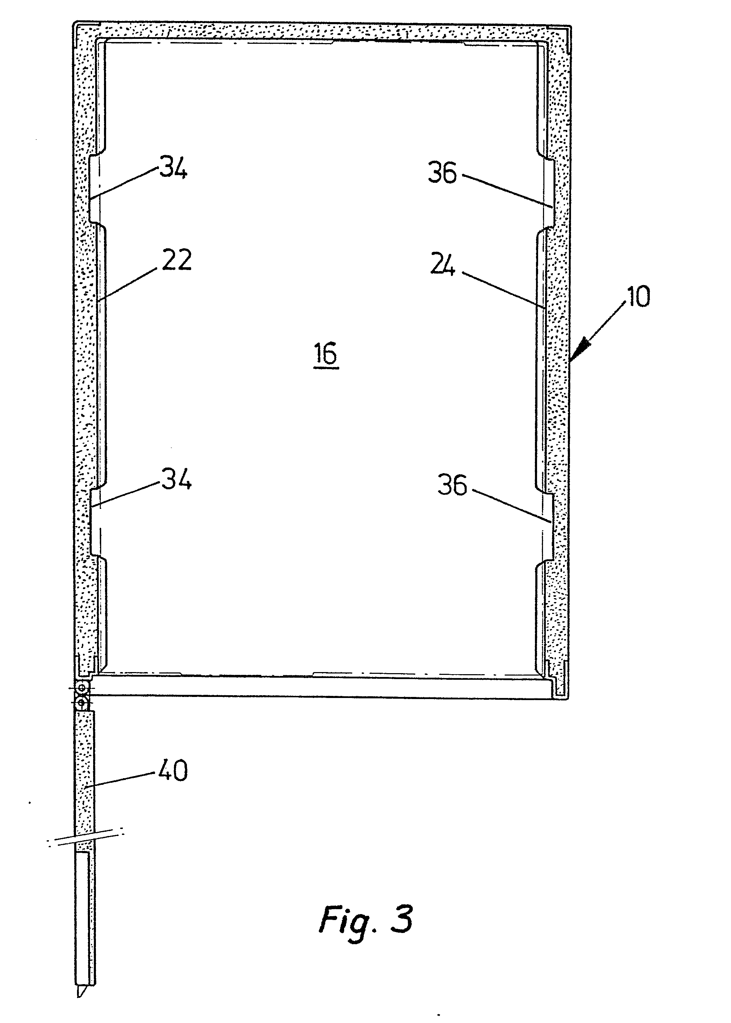

Der Servierwagen "S" besteht gemäss den Figuren 1 - 3 im wesentlichen aus einem eine Einheit darstellenden Kunststoffgehäuse 10, welches Ausformungen 12 aufweist, die beispielsweise der Aufnahme von Gelenken bzw. Scharnieren und Schliessvorrichtungen 14 und dergleichen mehr dienen. Weiterhin weist das Gehäuse 10 im Innenraum 16 vornehmlich horizontal verlaufende Vorsprünge 18 zur Aufnahme von Schubfächern 20 oder nicht dargestellten Tablaren auf.

Im oberen Bereich des Gehäuses 10 sind im Innenraum 16 desselben an zwei gegenüberliegenden Seitenwänden 22 und 24 vornehmlich in horizontaler Richtung verlaufend Ausnehmungen 26 vorgesehen, welche dem Einsatz einer herausnehmbaren Isolierplatte 28 sowie eines verschiebbaren Tablars 30 dienen. Zwischen der Isolierplatte 28 und dem Tablar 30 ist ein auf der Isolierplatte 28 liegendes, mit Trockeneis gefülltes Eisschubfach 32 vorgesehen. - Das Eis weist eine Temperatur von ca. minus 60$^{\circ}$C auf.

An den Seitenwänden 22 und 24 des Innenraumes 16 sind in vornehmlich vertikaler Richtung verlaufende Ausnehmungen 34 und 36 vorgesehen, welche sich von dem Eisschubfach 32 bis zum Boden 38 des Innenraumes 16 erstrecken und der Zirkulation von Kühlgas durch den Innenraum 16, besonders in den Bereichen der Seitenwände 22 und 24 desselben dienen.

In der Schliesslage deckt eine gegebenenfalls aus dem gleichen Kunststoff wie das Gehäuse 10 hergestelltes Tür 40 den Innenraum 16 ab.

An der Unterseite des Gehäuses 10 sind in bekannter Weise jeweils um eine vertikale Achse verschwenkbare Rollen 42 vorgesehen. - Die Rollen sind mit einer nicht näher dargestellten Bremse mit Hilfe eines Fussbremshebels 44 feststellbar.

-6-

Die Erfindung ist nicht auf das in der Zeichnung gezeigte Ausführungsbeispiel beschränkt. Im Sinne der Erfindung ist beispielsweise auch eine andere Ausbildung des Gehäuses bzw. Anordnung der Vorsprünge und Ausnehmungen im Innenraum desselben möglich, wenn diese erwünscht ist.

Der Servierwagen zeichnet sich besonders durch seine einfache Bauweise sowie durch sein verhältnismässig geringes Gewicht aus.

Patentansprüche

1. Servierwagen auf bremsbaren Rollen, insbesondere zum Bedienen in Verkehrsfahrzeugen wie Flugzeuge, Eisenbahnen und anderes mehr, bestehend aus einem Gehäuse und einer mit diesem gelenkig verbundenen Tür bzw. Abdeckung sowie daran angeordneten Schliessvorrichtungen und mit gegebenenfalls in dieses einsetzbare Schubfächer oder Tablare,

dadurch gekennzeichnet,

dass das eine Einheit darstellende und aus Kunststoff hergestellte Gehäuse (10) Ausformungen (12) zur Aufnahme von Gelenken bzw. Scharnieren, Schliessvorrichtungen (14) und dergleichen mehr sowie Vorsprünge (18) zur Aufnahme von Schubfächern (20) oder Tablaren und Ausnehmungen aufweist.

2. Servierwagen nach Anspruch 1, dadurch gekennzeichnet, dass das Gehäuse (10) aus einem geschäumten Kunststoff, beispielsweise Polyurethan (PU) hergestellt ist.

3. Servierwagen nach Anspruch 1, dadurch gekennzeichnet, dass die Abdeckung bzw. Tür (40) und die Schubfächer (20) oder die Tablare aus einem geschäumten Kunststoff, beispielsweise Polyurethan (PU) hergestellt sind.

4. Servierwagen nach Anspruch 1 und 2, dadurch gekennzeichnet, dass die Ausformungen (12) des Gehäuses (10) beim Schäumvorgang ausgeformt sind.

5. Servierwagen nach Anspruch 1, dadurch gekennzeichnet, dass im oberen Bereich des Innenraumes (16) des Gehäuses (10) an zwei gegenüberliegednen Seitenwänden (22 und 24) vornehmlich in horizontaler Richtung verlaufende Ausnehmungen (26) vorgesehen sind, welche dem Einsatz einer herausnehmbaren Isolierplatte (28) sowie eines verschiebbaren Tablars (30) dienen.

6. Servierwagen nach Ansprüchen 1 und 5, dadurch gekennzeichnet, dass zwischen der Isolierplatte (28) und dem Tablar (30) ein auf der Isolierplatte (28) liegendes Eisschubfach (32) angeordnet ist.

7. Servierwagen nach Ansprüchen 1 und 6, dadurch gekennzeichnet, dass an den Seitenwänden (22 und 24) des Innenraumes (16) in vornehmlich vertikaler Richtung verlaufende Ausnehmungen (34 und 36) vorgesehen sind, welche sich von dem Eisschubfach (32) bis zum Boden (38) des Innenraumes (16) erstrecken.

Fig. 1

Fig. 2

Fig. 3